# EUROPÄISCHE PATENTSCHRIFT

(11) **EP 0 633 850 B1**
(45) Veröffentlichungstag und Bekanntmachung des Hinweises auf die Patenterteilung: **06.12.1995**
(21) Anmeldenummer: 93911448.4
(22) Anmeldetag: 06.04.1993
(51) Int. Cl.: B60T 13/57, B60T 13/52

(54) **PNEUMATISCHER KRAFTVERSTÄRKER MIT ELEKTROMAGNETISCHER HILFSSTEUERUNG, INSBESONDERE FÜR KRAFTFAHRZEUG-BREMSANLAGEN**
PNEUMATIC ASSIST DEVICE WITH ELECTROMAGNETIC AUXILIARY CONTROL, ESPECIALLY FOR MOTOR VEHICLE BRAKING SYSTEMS
DISPOSITIF D'ASSISTANCE PNEUMATIQUE A COMMANDE ELECTROMAGNETIQUE AUXILIAIRE, NOTAMMENT POUR CIRCUITS DE FREINAGE DE VEHICULES AUTOMOBILES

(30) Priorität: 08.04.1992 DE 4211849
(43) Veröffentlichungstag der Anmeldung: 18.01.1995
(73) Patentinhaber: LUCAS INDUSTRIES PUBLIC LIMITED COMPANY, Solihull, West Midlands B91 3TX (GB)
(72) Erfinder: HEIBEL, Helmut, D-5431 Moschheim (DE); PIKKENHAHN, Josef, D-5472 Plaidt (DE)
(74) Vertreter: Goetz, Rupert, Dipl.-Ing.
(86) Internationale Anmeldenummer: EP9300855
(87) Internationale Veröffentlichungsnummer: WO9321048

(56) Entgegenhaltungen:
- EP-A- 0 140 187
- EP-A- 0 405 603
- EP-A- 0 478 396

## Beschreibung

Die Erfindung betrifft einen pneumatischen Kraftverstärker mit elektromagnetischer Hilfssteuerung, insbesondere für Kraftfahrzeug-Bremsanlagen, nach dem Oberbegriff des Anspruchs 1.

Bei einem bekannten Bremskraftverstärker dieser Gattung (EP 0 478 396 A1) ist das Anschlagglied am Ventilgehäuse befestigt und der Kolben hat eine breite Ringnut, in die das Anschlagglied mit axialem Spiel eingreift. Axial hinter der Ringnut hat der Kolben eine zweite, schmalere Ringnut und axial hinter dieser einen zylindrischen Abschnitt, auf dem der Ventilkörper axial verschiebbar geführt ist. Der Ventilkörper hat ein hakenartig radial nach innen umgebogenes hinteres Ende, das mit axialem Spiel in die zweite Ringnut des Kolbens eingreift, wodurch die axiale Relativbeweglichkeit des Ventilkörpers gegenüber dem Kolben begrenzt ist. Der Elektromagnet ist in axialem Abstand hinter dem Dichtkörper angeordnet und hat eine Spule, die auf dem Betätigungsglied befestigt ist, und einen hülsenförmigen Magnetanker, der auf dem Betätigungsglied axial verschiebbar geführt ist. Der Ventilkörper hat im Bereich seines hinteren Endes einen Flansch, der in einem axialen Abstand hinter dem hinteren Ende des Kolbens radial nach innen ragt. Zwischen diesem Flansch und dem Kolben ist die Ventilfeder angeordnet. Zwischen dem Flansch und dem Magnetanker ist auf dem Betätigungsglied eine Hülse geführt, die bei Erregung des Elektromagneten vom Magnetanker nach vorne verschoben wird und dadurch den Ventilkörper ebenfalls nach vorne, vom Dichtkörper weg, verschiebt. Auf diese Weise kann unabhängig von oder zusätzlich zu einer Vorwärtsbewegung des Kolbens, die über das Betätigungsglied bewirkt wird, eine Vorwärtsbewegung des Ventilkörpers auf elektromagnetischem Wege bewirkt werden, um die beiden Kammern im Ventilgehäuse voneinander zu trennen und in die hintere Kammer Umgebungsluft einströmen zu lassen.

Bei diesem bekannten Kraftverstärker ist die Ruhestellung des Ventilkörpers ausschließlich durch die Lage des Dichtkörpers definiert, an dem der Ventilkörper mit dem an ihm ausgebildeten zweiten Ventilsitz anliegt, während der Dichtkörper seinerseits am ersten Ventilsitz anliegt, welcher am Ventilgehäuse ausgebildet ist. Die gesamte Kraft der Ventilfeder wirkt über den Ventilkörper auf den Dichtkörper, so daß dieser von einer entsprechend kräftigeren Feder in entgegengesetzter Richtung belastet werden muß, damit er am ersten Ventilsitz anliegen kann. Die Positionierung des Ventilkörpers ist von der Lage des Ventilgehäuses, von bestimmten Längentoleranzen desselben und von elastischen Verformungen des Dichtkörpers abhängig und ist somit ungenau. Wegen dieser ungenauen Positionierung des Ventilkörpers lassen sich die zum Einleiten und Beenden einer normalen Bremsung erforderlichen Relativbewegungen zwischen den beiden Ventilsitzen und dem Dichtkörper nur mit verhältnismäßig großen Axialbewegungen des Betätigungsgliedes erzielen. Dies bedeutet, daß an einem mit dem Betätigungsglied verbundenen Bremspedal od. dgl. entsprechende Verlustwege auftreten.

Der Erfindung liegt die Aufgabe zugrunde, einen Bremskraftverstärker der eingangs beschriebenen Gattung derart weiterzubilden, daß er sich mit geringen Bewegungen des Betätigungsgliedes besonders feinfühlig steuern läßt.

Die Aufgabe ist erfindungsgemäß mit den Merkmalen des Patentanspruchs 1 gelöst.

Es ist zwar ein pneumatischer Bremskraftverstärker bekannt (EP 0405603 A2), bei dem ein zwischen einem Betätigungsglied und einem Kraftabgabeglied angeordneter Kolben oder Stössel über ein an ihm befestigtes radiales Anschlagglied an einem Anschlag des Verstärkergehäuses abstützbar ist, wodurch eine Ruhestellung dieses Kolbens und eines unmittelbar an ihm ausgebildeten Ventilsitzes festgelegt ist. Die Möglichkeit, die Stellung dieses Ventilsitzes elektromagnetisch zu beeinflussen, ist dort jedoch nicht gegeben.

Durch die erfindungsgemäße Anordnung eines Anschlaggliedes, das an einem zwischen Betätigungsglied und Kraftabgabeglied angeordneten Kolben befestigt ist, sich mit Axialspiel durch eine Aussparung eines Ventilkörpers hindurcherstreckt und sich radial außerhalb davon an einem gehäusefesten Anschlag abstützen kann, wird die Möglichkeit geschaffen, den Ventilkörper in jeder beliebigen Stellung des Kolbens, also auch ausgehend von der Ruhestellung, elektromagnetisch zu betätigen, ohne daß dadurch die genaue Positionierung des Ventilkörpers in dessen Ruhestellung beeinträchtigt wird. Eine Bremsung kann deshalb mechanisch schon durch eine sehr kleine Bewegung des Betätigungsgliedes eingeleitet werden, auch wenn die Charakteristiken der verschiedenen in einem Bremskraftverstärker üblicherweise vorhandenen Federn nicht besonders genau aufeinander abgestimmt sind.

Die Aussparung des Ventilkörpers ist vorzugsweise so bemessen, daß in der gemeinsamen Ruhestellung des Ventilkörpers und des Kolbens das Anschlagglied nahezu mit der gesamten Kraft der Ventilfeder, der Dichtkörper hingegen nur mit einer geringen Restkraft der Ventilfeder, belastet ist. Dies hat den Vorteil, daß der Dichtkörper nur mit einer geringen Federkraft in Richtung zu dem am Ventilgehäuse ausgebildeten ersten Ventilsitz hin vorgespannt zu sein braucht.

Dementsprechend ist es zweckmäßig, wenn der Dichtkörper mit einer der Ventilfeder entgegenwirkenden Feder belastet ist, die schwächer als die Ventilfeder ist.

Ferner ist es vorteilhaft, wenn der Ventilkörper in einem Bereich zwischen dem zweiten Ventilsitz und der Aussparung des Ventilkörpers gegen den Kolben durch eine Dichtung abgedichtet ist, deren wirksamer Dichtungsdurchmesser mindestens annähernd mit dem wirksamen Durchmesser des zweiten Ventilsitzes übereinstimmt. Dadurch wird vermieden, daß der Ventilkörper in seiner Ruhestellung vom Atmosphärendruck entgegen der Kraft der Ventilfeder belastet wird. Die Ventilfeder kann deshalb verhältnismäßig schwach sein, was wiederum den Vorteil hat, daß kleine Magnetkräfte genügen, um den Ventilkörper gegen den Widerstand der Ventilfeder zu verschieben.

Eine besonders platzsparende Bauweise ergibt sich bei einer Weiterbildung der Erfindung dadurch, daß der Elektromagnet im Ventilgehäuse eingebaut ist und der Ventilkörper als Magnetanker ausgebildet ist.

Dabei ist es vorteilhaft, wenn der Elektromagnet von einem Ringraum umschlossen ist, welcher Bestandteil eines von den Ventilsitzen und dem Dichtkörper gesteuerten Kanals ist. Der Ringraum wird bei bestimmten Ventilstellungen von Luft durchströmt, so daß der Elektromagnet gekühlt wird.

Bei der erfindungsgemäßen Anordnung des Elektromagneten innerhalb des Ventilgehäuses ist es schließlisch vorteilhaft, wenn die Ventilfeder zwischen dem Kolben und einer Verlängerung des Ventilkörpers angeordnet ist, welche vom Dichtkörper umschlossen ist. Die Ventilfeder ist also aus dem unmittelbaren Wirkungsbereich des Elektromagneten heraus in einen Bereich verlagert, in dem sie die Einwirkung des Elektromagneten auf den als Magnetanker ausgebildeten Ventilkörper nicht stören kann.

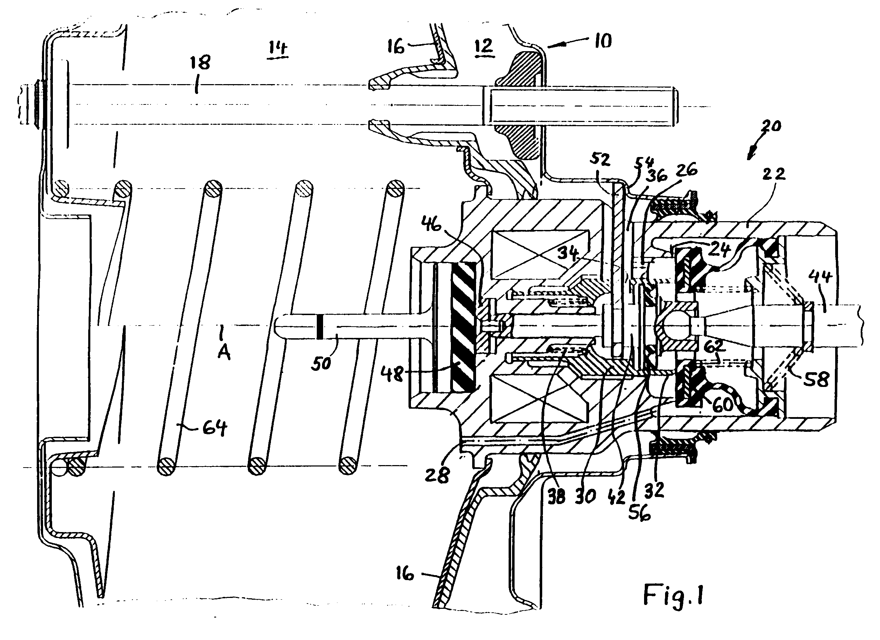

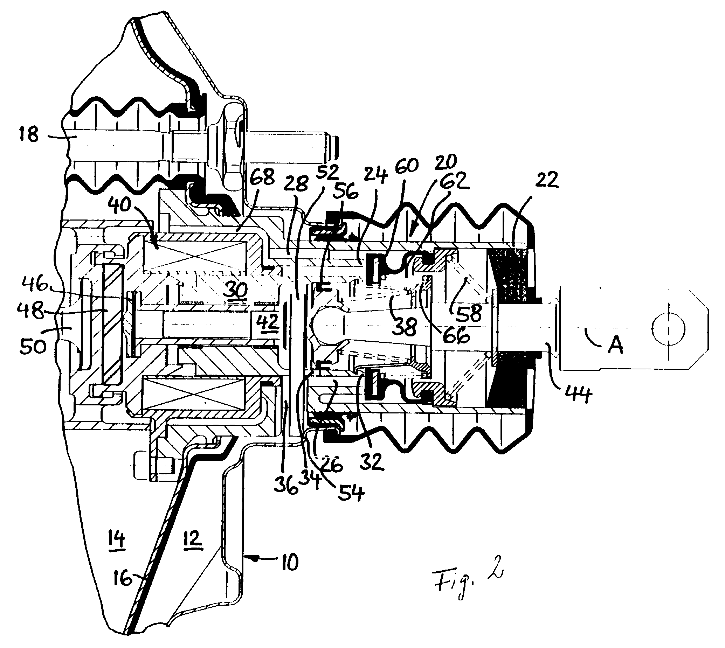

Ausführungsbeispiele der Erfindung werden im folgenden anhand schematischer Zeichnungen mit weiteren Einzelheiten erläutert. Fig. 1 ist ein Axialschnitt durch einen pneumatischen Bremskraftverstärker mit elektromagnetischer Hilfssteuerung und Fig. 2 ist ein entsprechender Axialschnitt einer Weiterbildung der Erfindung.

Der in Fig. 1 dargestellte Bremskraftverstärker ist im wesentlichen rotationssymmetrisch in bezug auf eine Achse A und hat ein nur teilweise gezeichnetes Verstärkergehäuse 10 mit einer hinteren Kammer 12 und einer vorderen Kammer 14, die durch eine bewegliche Wand 16 voneinander getrennt sind. Die vordere und hintere Wand des Verstärkergehäuses 10 sind durch achsparallele Zuganker 18, von denen nur einer dargestellt ist, miteinander verbunden.

Zum Bremskraftverstärker gehört ein Steuerventil 20, das zum größten Teil in das Verstärkergehäuse 10 eingebaut ist und ein in bezug auf dieses axial bewegliches Ventilgehäuse 22 aufweist. Im Inneren des Ventilgehäuses 22 ist ein ringförmiger erster Ventilsitz 24 ausgebildet, der einen in die hintere Kammer 12 mündenden Kanal 26 von einem in die vorder Kammer 14 mündenden Kanal 28 trennt. Radial innerhalb des Kanals 26 weist das Ventilgehäuse 22 eine axiale Stufenbohrung auf, in der ein hülsenförmiger Ventilkörper 30 längs der Achse A verschiebbar geführt ist. Am hinteren, in der Zeichnung rechten, Ende des Ventilkörpers 30 ist ein zum ersten Ventilsitz 24 konzentrischer zweiter Ventilsitz 32 ausgebildet.

In einem Abstand vor dem zweiten Ventilsitz 32, in der Zeichnung also links davon, weist der Ventilkörper 30 eine radiale Aussparung 34 auf, an die sich eine ebenfalls radiale, in axialer Richtung jedoch breitere Aussparung 36 im Ventilgehäuse 22 anschließt. Innerhalb des Ventilgehäuses 22 ist ferner eine axial vorgespannte Ventilfeder 38 angeordnet, die den Ventilkörper 30 nach hinten drängt. Außerdem ist in das Steuerventil 20 ein Elektromagnet 40 eingebaut, dem der Ventilkörper 30 als Magnetanker zugeordnet ist.

In einer zentralen Bohrung des Ventilgehäuses 22 ist schließlich ein Kolben 42 geführt, der an seinem hinteren Ende mit einem stangenförmigen Betätigungsglied 44 verbunden ist und an seinem vorderen Ende einen Kolbenkopf 46 aufweist. Dieser bildet zusammen mit einem in das Ventilgehäuse 22 eingebetteten Gummikörper 48 und einem davor angeordneten Kraftabgabeglied 50 eine mechanische Kraftübersetzung von bei Bremskraftverstärkern üblicher Art.

In eine Ringnut des Kolbens 42 ist ein Anschlagglied 52 derart eingerastet, daß es zu gemeinsamer Axialbewegung mit dem Kolben verbunden ist. Das Anschlagglied 52 erstreckt sich radial durch die Aussparungen 34 und 36 im Ventilkörper 30 bzw. im Ventilgehäuse 22 nach außen und liegt in der abgebildeten Ruhestellung des Kolbens 42 an einem Anschlag 54 an, der von einer Schulter des Verstärkergehäuses 10 gebildet und somit von der Stellung des Ventilgehäuses 22 unabhängig ist.

In einem Bereich zwischen dem Anschlagglied 52 und dem Betätigungsglied 44 ist am Kolben 42 eine ringförmige Dichtung 56 befestigt, die gegen den Ventilkörper 30 auf einem Durchmesser abgedichtet, der mit dem wirksamen Durchmesser des zweiten Ventilsitzes 32 übereinstimmt. Hinter der Dichtung 56, in der Zeichnung also rechts davon, herrscht ständig Atmosphärendruck. Die Dichtung 56 verhindert, daß Umgebungsluft durch das Innere des Ventilkörpers 30 und weiter durch die Aussparungen 34 und 36 in die hintere Kammer 12 gelangt.

Das Betätigungsglied 44 ist durch eine hintere Rückstellfeder 58 normalerweise in seiner abgebildeten Ruhestellung gehalten, in der ein innerhalb des Ventilgehäuses 22 in üblicher Weise angeordneter und durch eine Feder 62 nach vorne vorgespannter ringförmiger Dichtkörper 60 an beiden Ventilsitzen 24 und 32 anliegt. Die bewegliche Wand 16 und das mit ihr zu gemeinsamer Axialbewegung verbundene Ventilgehäuse 22 sind durch eine weitere Rückstellfeder 64 in ihrer abgebildeten hinteren Endstellung gehalten.

Der in Fig. 1 dargestellte Bremskraftverstärker arbeitet folgendermaßen:

Im unbetätigtem Zustand liegt das Anschlagglied 52 am Anschlag 54 an, wodurch die Ruhestellung des Kolbens 42 festgelegt ist. Der Ventilkörper 30 stützt sich mit nahezu der gesamten Kraft der Ventilfeder 38 am Anschlagglied 52 ab, wodurch auch die Ruhestellung des Ventilkörpers festgelegt ist. Dabei liegt der zweite Ventilsitz 32 mit einer geringen Restkraft der Ventilfeder 38 am Dichtkörper 60 an, der zugleich am ersten Ventilsitz 24 anliegt.

Wenn nun das Betätigungsglied 44, das beispielweise mit dem Bremspedal eines Kraftfahrzeugs verbunden ist, nach vorne verschoben wird und dadurch den Kolben 42 nach vorne schiebt, nimmt dieser über das Anschlagglied 52 den Ventilkörper 30 mit, sodaß dessen Ventilsitz 32 sich vom Dichtkörper 60 löst und von hinten in das Ventilgehäuse 22 einströmende Umgebungsluft durch den Kanal 26 und weiter durch die radiale Aussparung 36 im Steuerventil 20 in die hintere Kammer 12 gelangen läßt. Die vordere Kammer 14 ist von der hinteren Kammer 12 getrennt, da der Dichtkörper 60 am ersten Ventilsitz 24 anliegt. Somit entsteht zwischen den beiden Kammern 12 und 14 ein Druckgefälle, das die bewegliche Wand 16 samt dem Ventilgehäuse 22 und dem Kraftabgabeglied 50 sich nach vorne bewegen läßt.

Falls diese mechanisch bewirkte Vorwärtsbewegung und die dabei stattfindende Kraftabgabe, beispielsweise an den Hauptzylinder einer Fahrzeug-Bremsanlage, beschleunigt und verstärkt werden soll, wird der Elektromagnet 40 erregt, so daß er den Ventilkörper 30 vom Anschlagglied 52 weg nach vorne zieht und dadurch den freien Strömungsquerschnitt zwischen dem zweiten Ventilsitz 32 und dem Dichtkörper 60 vergrößert. Eine derart verstärkte Kraftausübung kann beispielsweise wünschenswert sein, wenn ein abzubremsendes Fahrzeug stark beladen ist.

Nach dem Abschalten des Elektromagneten 40 wird der Ventilkörper 30 von der Ventilfeder 38 wieder nach hinten gedrängt, so daß er sich an das Anschlagglied 52 anlegt. Sobald die mechanische Krafteinleitung über das Betätigungsglied 44 aufhört, kehrt der Kolben 42 samt dem Ventilkörper 30 in die Ruhestellung zurück. Die bewegliche Wand 16 und das Ventilgehäuse 22 nehmen an dieser Rückkehrbewegung so lange nicht teil, wie noch ein Druckgefälle zwischen den Kammern 12 und 14 besteht. Das Druckgefälle wird dadurch abgebaut, daß der Ventilkörper 30 den Dichtkörper 60 vorübergehend nach hinten drängt, sodaß dieser sich vom ersten Ventilsitz 24 löst.

Die in Fig. 2 dargestellte Weiterbildung unterscheidet sich von Fig. 1 vor allem dadurch, daß die Ventilfeder 38 in einer käfigartigen Verlängerung 66 des Ventilkörpers 30 angeordnet ist. Die käfigartige Verlängerung 66 erstreckt sich axial durch den ringförmigen Dichtkörper 60 hindurch, ohne diesen zu berühren, und ist von hinten her in eine Ringnut eingerastet, die nahe dem hinteren Ende des hülsenförmigen Ventilkörpers 30 an dessen Innenseite ausgebildet ist. In entsprechender Weise erstreckt sich das stangenförmige Betätigungsglied 44 axial durch die Ventilfeder 38 und die käfigartige Verlängerung 66 hindurch, ohne sie zu berühren.

Gemäß Fig. 2 ist der Elektromagnet 40 so in das Ventilgehäuse 22 eingebaut, daß er von einem Ringraum 68 umschlossen ist, der die vordere Kammer 14 mit dem Kanal 28 verbindet und infolgedessen durchlüftet ist, so daß vom Elektromagneten 40 erzeugte Wärme nach jeder Bremsung rasch abgeführt wird.

## Patentansprüche

1. Pneumatischer Kraftverstärker mit elektromagnetischer Hilfssteuerung, insbesondere für Kraftfahrzeug-Bremsanlagen,, mit
- einem Verstärkergehäuse (10), in dem eine erste Kammer (12) und eine zweite Kammer (14) enthalten und durch eine bewegliche Wand (16) voneinander getrennt sind,
- einem Ventilgehäuse (22), das mit der beweglichen Wand (16) zu gemeinsamer axialer Relativbewegung in bezug auf das Verstärkergehäuse (10) verbunden ist und einen ersten Ventilsitz (24) aufweist,
- einem Dichtkörper (60), der im Ventilgehäuse (22) axial beweglich angeordnet sowie in Richtung zum ersten Ventilsitz (24) hin vorgespannt ist,
- einem Kolben (42), der im Ventilgehäuse (22) axial verschiebbar geführt und zum Übertragen von Betätigungskräften von einem Betätigungsglied (44) auf ein Kraftabgabeglied (50) ausgebildet ist,
- einem Ventilkörper (30), der im Ventilgehäuse (22) in bezug auf den Kolben (42) axial verschiebbar geführt ist und einen mit dem Dichtkörper (60) zusammenwirkenden zweiten Ventilsitz (32) aufweist,
- einem Anschlagglied (52), das sich im wesentlichen radial durch eine Aussparung (36) des Ventilgehäuses (22) nach außen erstreckt und bei unbetätigtem Betätigungsglied (44) durch Anliegen an einem am Verstärkergehäuse (10) ausgebildeten Anschlag (54) eine Ruhestellung des Kolbens (42) in bezug auf das Verstärkergehäuse (10) definiert,
- einer Ventilfeder (38), durch die der Ventilkörper (30) in Richtung zum Dichtkörper (60) hin vorgespannt ist, und
- einem Elektromagneten (40), der in erregtem Zustand den Ventilkörper (30) gegen den Widerstand der Ventilfeder (38) vom Dichtkörper (60) wegbewegt,
dadurch **gekennzeichnet,**
daß das Anschlagglied (52) mit dem Kolben (42) fest verbunden ist und in der Aussparung (36) des Ventilgehäuses (22) sowie in einer entsprechenden radialen Aussparung (34) des Ventilkörpers (30) ein Axialspiel aufweist, das so bemessen ist, daß die Ventilfeder (38) in nicht erregtem Zustand des Elektromagneten (40) den Ventilkörper (30) am Anschlagglied (52) und in der Ruhestellung des Kolbens (42) zugleich den zweiten Ventilsitz (32) am Dichtkörper (60) anliegend hält.

2. Kraftverstärker nach Anspruch 1,
dadurch **gekennzeichnet,** daß die Aussparung (34) des Ventilkörpers (30) so bemessen ist, daß in der gemeinsamen Ruhestellung des Ventilkörpers (30) und des Kolbens (42) das Anschlagglied (52) nahezu mit der gesamten Kraft der Ventilfeder (38), der Dichtkörper (60) hingegen nur mit einer geringen Restkraft der Ventilfeder (38), belastet ist.

3. Kraftverstärker nach Anspruch 2,
dadurch **gekennzeichnet,** daß der Dichtkörper (60) mit einer der Ventilfeder (38) entgegenwirkenden Feder (62) belastet ist, die schwächer als die Ventilfeder (38) ist.

4. Kraftverstärker nach einem der Ansprüche 1 bis 3,
dadurch **gekennzeichnet,** daß der Ventilkörper (30) in einem Bereich zwischen dem zweiten Ventilsitz (32) und der Aussparung (34) des Ventilkörpers (30) gegen den Kolben (42) durch eine Dichtung (56) abgedichtet ist, deren wirksamer Dichtungsdurchmesser mindestens annähernd mit dem wirksamen Durchmesser des zweiten Ventilsitzes (32) übereinstimmt.

5. Kraftverstärker nach einem der Ansprüche 1 bis 4,
dadurch **gekennzeichnet**, daß der Elektromagnet (40) im Ventilgehäuse (22) eingebaut ist und der Ventilkörper (30) als Magnetanker ausgebildet ist.

6. Kraftverstärker nach Anspruch 5,
dadurch **gekennzeichnet**, daß der Elektromagnet (40) von einem Ringraum (68) umschlossen ist, welcher Bestandteil eines von den Ventilsitzen (24, 32) und dem Dichtkörper (60) gesteuerten Kanals (28) ist.

7. Kraftverstärker nach Anspruch 5 oder 6,
dadurch **gekennzeichnet**, daß die Ventilfeder (38) zwischen dem Kolben (42) und einer Verlängerung (66) des Ventilkörpers (30) angeordnet ist, welche vom Dichtkörper (60) ringförmig umschlossen ist.

## Claims

1. A pneumatic booster with electromagnetic servo control, especially for motor vehicle brake systems, comprising
- a booster casing (10) inside which a first chamber (12) and a second chamber (14) are separated from each other by a movable wall (16),
- a valve housing (22) which is connected to the movable wall (16) for joint axial relative movement with respect to the booster casing (10) and which includes a first valve seat (24),
- a sealing member (60) which is arranged to be axially movable inside the valve housing (22) and is biased in a direction towards the first valve seat (24),
- a piston (42) which is guided in the valve housing (22) so as to be axially displaceable and designed to transmit actuating forces from an actuator member (44) to an output member (50),
- a valve closing member (30) which is guided in the valve housing (22) so as to be axially displaceable with respect to the piston (42) and has a second valve seat (32) for cooperation with the sealing member (60),
- an abutment member (52) which projects to the outside substantially radially through a recess (36) formed in the valve housing (22) and defines an inoperative position of the piston (42) with respect to the booster casing (10) by abutting against a stop (54) formed at the booster casing (10), when the actuator member (44) is not actuated,
- a valve spring (38) which biases the valve closing member (30) in the direction of the sealing member (60), and
- an electromagnet (40) which, when energized, moves the valve closing member (30) away from the sealing member (60) against the resistance of the valve spring (38),
**characterized** in that the abutment member (52) is connected firmly to the piston (42) and received in the recess (36) of the valve housing (22) and in a corresponding radial recess (34) of the valve closing member (30) with an axial clearance of such dimensions that the valve spring (38) holds the valve closing member (30) against the abutment member (52) when the electromagnet (40) is not energized, simultaneously holding the second valve seat (32) against the sealing member (60) when the piston (42) is in its inoperative position.

2. The booster as claimed in claim 1, characterized in that the recess (34) in the valve closing member (30) is dimensioned such that the abutment member (52) is loaded by almost the entire force of the valve spring (38), in the joint position of rest of the valve closing mebmer (30) and the piston (42), while the sealing member (60) is loaded only by a minor residual force of the valve spring (38).

3. The booster as claimed in claim 2, characterized in that the sealing member (60) is loaded by a spring (62) which counteracts the valve spring (38) and is weaker than the valve spring (38).

4. The booster as claimed in any one of claims 1 to 3, characterized in that the valve closing member (30) is sealed off against the piston (42) in an area between the second valve seat (32) and the recess (34) formed in the valve closing member (30) by a seal (56) whose effective sealing diameter corresponds at least approximately to the effective diameter of the second valve seat (32).

5. The booster as claimed in any one of claims 1 to 4, characterized in that the electromagnet (40) is installed in the valve housing (22) and the valve closing member (30) is designed as a magnetic armature.

6. The booster as claimed in claim 5, characterized in that the electromagnet (40) is enclosed by an annular space (68) which is part of a passage (28) controlled by the valve seats (24, 32) and the sealing member (60).

7. The booster as claimed in claim 5 or 6, characterized in that the valve spring (38) is disposed between the piston (42) and an extension (66) of the valve closing member (30) which extension is surrounded annularly by the sealing member (60).

## Revendications

1. Dispositif d'assistance pneumatique à commande électromagnétique auxiliaire, notamment pour circuits de freinage de véhicules automobiles, comportant :
- un carter de dispositif amplificateur (10), dans lequel sont constituées une première chambre (12) et une deuxième chambre (14), séparées l'une de l'autre par une paroi (16) mobile,
- un carter de soupape (22), relié à la paroi mobile (16) pour produire un déplacement relatif axial commun par rapport au carter de dispositif amplificateur (10) et présentant un premier siège de soupape (24),
- un corps d'étanchéité (60), disposé mobile axialement dans le carter de soupape (2) et précontraint dans la direction du premier siège de soupape (24),
- un piston (42), guidé de façon à pouvoir se déplacer axialement dans le carter de soupape (22) et réalisé pour assurer la transmission d'efforts d'actionnement d'un organe d'actionnement (44) à un organe de fourniture de force (50),
- un corps de soupape (30), guidé dans le carter de soupape (22) de façon à pouvoir se déplacer axialement par rapport au piston (42) et présentant un deuxième siège de soupape (32), coopérant avec le corps d'étanchéité (60),
- un organe de butée (52), s'étendant sensiblement radialement, vers l'extérieur, dans un évidement (36) du carter de soupape (22), et définissant, lorsque l'organe d'actionnement (44) n'est pas actionné, par appui sur une butée (54) réalisée sur le carter de dispositif amplificateur (10), une position de repos du piston (42) par rapport au carter de dispositif amplificateur (10),
- un ressort de soupape (38), au moyen duquel le corps de soupape (30) est précontraint dans la direction du corps d'étanchéité (60), et
- un électroaimant (40), écartant, à l'état excité, le corps de soupape (30) par rapport au corps d'étanchéité (60), à l'encontre de la résistance du ressort de soupape (38),
caractérisé en ce que l'organe de butée (52) est relié rigidement au piston (42) et présente, dans l'évidement (36) du corps de soupape (22), ainsi que dans un évidement radial (34) correspondant du corps de soupape (30), un jeu axial de valeur telle que, à l'état non excité de l'électroaimant (40), le ressort de soupape (38) maintient le corps de soupape (30) en appui sur la butée et, dans la position de repos du piston (42), maintient en même temps le deuxième siège de soupape (32) sur le corps d'étanchéité (60).

2. Dispositif d'assistance selon la revendication 1, caractérisé en ce que l'évidement (34) du corps de soupape (30) est de dimensions telles que, dans la position de repos commune du corps de soupape (30) et du piston (42), l'organe de butée (52) est chargé à peu près par toute la force commune venant du ressort de soupape (38), mais par contre le corps d'étanchéité (60) est chargé seulement avec une force résiduelle faible venant du ressort de soupape (38).

3. Dispositif d'assistance selon la revendication 2, caractérisé en ce que le corps d'étanchéité (60) est chargé par un ressort (62) agissant à l'encontre du ressort de soupape (38) et plus faible que ce dernier.

4. Dispositif d'assistance selon l'une des revendications 1 à 3, caractérisé en ce que, dans une zone se trouvant entre le deuxième siège de soupape (32) et l'évidement (34) du corps de soupape (30), le corps de soupape (30) est isolé de façon étanche par rapport au piston (42), au moyen d'un joint d'étanchéité (56), dont le diamètre d'étanchéité efficace coïncide au moins à peu près avec le diamètre efficace du deuxième siège de soupape (32).

5. Dispositif d'assistance selon l'une des revendications 1 à 4, caractérisé en ce que l'électroaimant (40) est intégré dans le carter de soupape (22), et le corps de soupape (30) est réalisé sous forme d'induit magnétique.

6. Dispositif d'assistance selon la revendication 5, caractérisé en ce que l'électroaimant (40) est enfermé dans un espace annulaire (68), faisant partie d'un canal (28) commandé par les sièges de soupape (24, 32) et le corps d'étanchéité (60).

7. Dispositif d'assistance selon la revendication 5 ou 6, caractérisé en ce que le ressort de soupape (38) est disposé entre le piston (42) et un prolongement (66) du corps de soupape (30), entouré de façon annulaire par le corps d'étanchéité (60).
